# EUROPEAN PATENT APPLICATION

(11) **EP 2 450 113 A2**
(43) Date of publication of application: **09.05.2012**
(21) Application number: 10794013.2
(22) Date of filing: 21.06.2010
(51) Int. Cl.: B08B 9/04

(54) **DEVICE AND METHOD FOR PERFORMING WORK IN PIPELINES**

(30) Priority: 28.06.2009 JP 2009153079
(71) Applicant: Urakami LLC, Kanagawa 234-0054 (JP)
(72) Inventor: URAKAMI Fukashi, Yokohama-shi Kanagawa 234-0054 (JP)
(74) Representative: Plougmann & Vingtoft A/S
(86) International application number: PCT/JP2010/060426
(87) International publication number: WO 2011/001843

(57) **Abstract**

Provided are a method and device for performing work in pipelines, whereby it is possible to exert an extremely large driving force within a pipeline. Moreover, provided are a method and device for performing work in pipelines, which are provided with a means for forcibly drying the wet inner surface of a pipeline. The device is provided with an annular pressure boundary seal with a free-end portion that comes into contact with the inner wall of the pipeline. The seal separates the space within the pipeline into two spaces, space (A) and space (B), using the seal as a boundary. The end of space (A) adjacent to the seal is connected with a suction pump via a hose, while the other end of space (A), which is not adjacent to the seal, is connected with the fluid surrounding the pipeline via a vacuum breaker that adjusts the negative pressure within space (A).; A hose is disposed in space (B) and the end of space (B), which is not adjacent to the seal, is connected with the fluid that surrounds the pipeline.

## Description

### TECHNICAL FIELD

This invention relates to a device capable of moving along the surface of an internal pipe, having a repair device/s that acts on the surface of the internal pipe, such a repair device may be a cleaning device to remove foreign matter such as rust or aquatic organisms attached to the internal pipe such as a clear-water pipe, drainage or gas pipe, and such a repair device also may be a coating device to spray coating material such as paint or corrosion resistant alloys to the surface of the internal pipe after removing the foreign matter.

### BACKGROUND ART

As an example of the working devices described in the above, it was disclosed the "Working method for an internal pipe and working device for the same" described in Japan Patent Application Examined Publication No. 2003-225626.
[Patent Reference 1]
   Japan Patent Application Examined Publication No.2003-225626

### DISCLOSURE OF THE INVENTION

In the working device described in the above as the "Working method for an internal pipe and working device for the same" described in Japan Patent Application Examined Publication No.2003-225626, there are following problems to be solved.
One of the problems of the "Working method for an internal pipe and working device for the same" is caused by the structure of the working device that the main unit of the working device moves along the internal pipe by being pulled by a rope, of which end of the rope is connected to the main unit, and another end of the rope is wound on the winch which is located outside of the end of the pipe.
According to the above structure of the working device, it is required the process to insert the rope from one end of the pipe to the other end of it, therefore the process is tiresome in such a case that the pipe is very long or there is a vent in the middle of the pipe.
In such a device as the "Working method for an internal pipe and working device for the same", the procedures described below are performed in the task of repairing the inside of the pipe. First, the water-jetting cleaning is carried out to remove foreign matter attached to the surface of the pipe, then the work is carried out to vacuum recover the foreign matter removed, and finally the coating material is sprayed to the surface of the pipe. However, there is a serious problem in the above device as mentioned below.
Drying process for the wet surface after water-jetting, even though it is an essential step in the process of migrating to the coating process from the water-jetting cleaning process, the process is not described in the "Working method for an internal pipe and working device for the same".
"Forced drying the wet surface of the pipe" is essential to coat well the surface of the pipe with coating material.
In case of "natural drying" for the wet surface of the pipe, it takes a lot of time for drying, further the cleaned surface rust again the more over the course of time.
In addition, it takes a lot of time for drying of painted surface of the pipe. Accordingly, technical objectives of the present invention are as follows. The technical objective of the present invention is to provide the "Working device for an internal pipe and working method for the same" having the features as follows.
In the working device, the driving force for the main unit of the working device to be moved along the pipe is very large in spite of not being equipped with the winch.
Then, the working device has the "Means to dry the wet surface of the pipe forcibly".
Further, the working device has the "Means to dry the painted surface of the pipe forcibly".

In order to solve the technical problems described in the above, provided according to the present invention as described in claim 1, comprising a working device capable of moving along the surface of an internal pipe, comprising:
An annular pressure boundary seal, free-end outer portion of which comes into contact with the surface of the internal pipe, inner portion of which is fixed to the main body of the main unit of the working device;
wherein the seal separates the space inside the pipe into two spaces, space (A) and space (B), using the seal as a boundary;
the end portion of space (A) adjacent to the seal, being connected with a suction pump via a hose;
the other end portion of space (A), which is not adjacent to the seal, being connected with the fluid surrounding the pipe via a vacuum breaker that adjusts the negative pressure within space (A);
the hose, being disposed in space (B);
the end portion of space (B), which is not adjacent to the seal, being connected with the fluid that surrounds the pipe.

In order to solve the technical problems described in the above, provided according to the present invention as described in claim 2, comprising a working device capable of moving along the surface of the internal pipe described in Claims 1, wherein:
The annular pressure boundary seal is composed of at least a free-end outer portion and an inner portion, the free-end outer portion being in contact with the surface of the pipe after extending both in a direction close to the surface from the inner portion and in a direction away from space (A) in cross-section cut parallel to the axis of the pipe, the inner portion being fixed to the main body of the main unit of the working device.

In order to solve the technical problems described in the above, provided according to the present invention as described in claim 3, comprising a working device capable of moving along the surface of the internal pipe described in Claims 1, wherein:
The annular pressure boundary seal is composed of a free-end outer portion and two inner portions, the free-end outer portion having an arc-shape in cross section, two ends of the arc-portion being fixed to the main body of the main unit of the working device, the two ends of the arc-portion being the same as the two inner portions, each end of the two ends of the arc-shaped portion extending in the direction of the surface of the pipe, the two extending portions being combined and becoming one at the most extended part;
there is a valve which connects space (B) to a space inside the annular pressure boundary seal.

In order to solve the technical problems described in the above, provided according to the present invention as described in claim 4, comprising a working device capable of moving along the surface of the internal pipe described in Claims 1 through 3, wherein:
The annular pressure boundary seal is affixed to the main body of the main unit of the working device via a spherical bearing in order that the axis of the seal is to be located near the axis of the pipe even in the bend.

In order to solve the technical problems described in the above, provided according to the present invention as described in claim 5, comprising a working device capable of moving along the surface of the internal pipe described in Claims 1 through 4, wherein:
The working device is equipped with a means to blast cleaning materials such as water or abrasives in order to clean the surface inside the pipe.

In order to solve the technical problems described in the above, provided according to the present invention as described in claim 6, comprising a working device capable of moving along the surface of an internal pipe, comprising:
An annular pressure boundary seal, free-end outer portion of which comes into contact with the surface of the internal pipe, inner portion of which is fixed to the main body of the main unit of the working device;
wherein the seal separates the space inside the pipe into two spaces, space (A) and space (B), using the seal as a boundary;
the end portion of space (A) adjacent to the seal, being connected with a delivery pump via a hose;
the other end portion of space (A), which is not adjacent to the seal, being connected with the fluid surrounding the pipe via a relief valve that adjusts the positive pressure within space (A);
the hose, being disposed in space (B);
the end portion of space (B), which is not adjacent to the seal, being connected with the fluid that surrounds the pipe.
Being explained further, the delivery pump for air has the function to compress the inhaled air. Being compressed the air inside the pump, the discharged air is heated. Therefore the hot air is delivered into space (A) from the delivery pump.

In order to solve the technical problems described in the above, provided according to the present invention as described in claim 7, comprising a working device capable of moving along the surface of the internal pipe described in Claims 6, wherein:
The annular pressure boundary seal is composed of at least a free-end outer portion and an inner portion, the free-end outer portion being in contact with the surface of the pipe after extending both in a direction close to the surface from the inner portion and in a direction away from space (A) in cross-section cut parallel to the axis of the pipe, the inner portion being fixed to the main body of the main unit of the working device.

In order to solve the technical problems described in the above, provided according to the present invention as described in claim 8, comprising a working device capable of moving along the surface of the internal pipe described in Claims 6, wherein:
The annular pressure boundary seal is composed of a free-end outer portion and two inner portions, the free-end outer portion having an arc-shape in cross section, two ends of the arc-portion being fixed to the main body of the main unit of the working device, the two ends of the arc-portion being the same as the two inner portions, each end of the two ends of the arc-shaped portion extending in the direction of the surface of the pipe, the two extending portions being combined and becoming one at the most extended part;
there is a valve which connects space (A) to a space inside the annular pressure boundary seal.

In order to solve the technical problems described in the above, provided according to the present invention as described in claim 9, comprising a working device capable of moving along the surface of the internal pipe described in Claims 6 through 8, wherein:
The annular pressure boundary seal is affixed to the main body of the main unit of the working device via a spherical bearing in order that the axis of the seal is to be located near the axis of the pipe even in the bend.

In order to solve the technical problems described in the above, provided according to the present invention as described in claim 10, comprising a working device capable of moving along the surface of the internal pipe described in Claims 6 through 9, wherein:
The working device is equipped with a means of coating materials such as paint or corrosion resistant alloys in order to apply a coating to the surface inside the pipe.

In order to solve the technical problems described in the above, provided according to the present invention as described in claim 11, comprising:
The first process to clean the surface of the pipe, that process is carried out from space (B) toward space (A) by using the working device capable of moving along the pipe being equipped with a means to blast cleaning materials such as water or abrasives in order to clean the surface inside the pipe that working device is described in Claims 1 through 5;
The second process to apply a coating to the surface of the pipe, that process is carried out from space (A) toward space (B) by using the working device capable of moving along the pipe being equipped with a means of coating materials such as paint or corrosion resistant alloys in order to apply a coating to the surface inside the pipe that working device is described in Claims 6 through 10.

Effects of the present invention will be explained below.
The present invention is to provide the "Working device for an internal pipe and working method for the same" having the features as follows.
In the working device, the driving force for the main unit of the working device to be moved along the pipe is very large in spite of not being equipped with the winch.
Then, the working device has the "Means to dry the wet surface of the pipe forcibly".
Further, the working device has the "Means to dry the painted surface of the pipe forcibly".

### DESCRIPTIONS OF THE PREFERRED EMBODIMENTS

Preferred embodiments of the working device configured according to the present invention will be described in detail below, referring to the figures attached hereto.

Fig. 1 is a overall view of the first preferred embodiment of the "Working device for an internal pipe and working method for the same" configured according to the present invention, showing the configuration of the first preferred embodiment of the working device that includes the main unit and ancillary related equipments.
Fig. 2 is an enlarged section view of the main unit of the working device shown in Fig. 1.
Fig. 3 is a top view of the main unit shown in Fig. 2.
Fig. 4 is a side view from the arrows A - A of the main unit shown in Fig. 2.
Fig. 5 is a side view from the arrows B - B of the main unit shown in Fig. 2.
Fig. 6 is a side view from the arrows C - C of the main unit shown in Fig. 2.
Fig. 7 is a side view from the arrows D - D of the main unit shown in Fig. 2.
Fig. 8 is an enlarged section view of the vacuum breaker shown in Fig. 1.
Fig. 9 is an enlarged section view of the pressure boundary seal shown in Fig. 2.
Fig. 10 is a section view showing an embodiment of the main unit shown in Fig. 2 at the bend portion of the pipe.

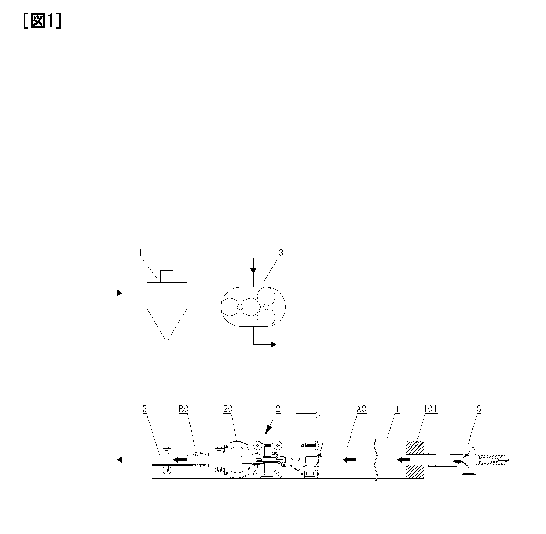

In Fig. 1, the first preferred embodiment of the "Working device for an internal pipe and working method for the same" configured according to the present invention, comprising:
The main unit 2 placed inside the pipe;
The hose 5, of which upstream end being connected to the main unit 2, of which downstream end being connected to the upstream side inlet of the solid fluid separation device 4;
The roots type vacuum pump 3 as a type of the positive-displacement pumps, of which upstream inlet being connected to the downstream side outlet of the solid fluid separation device 4, of which downstream outlet being released into the space that surround the pipe 1;
The vacuum breaker 6, being connected to one end of the pipe wherein the hose 5 is not placed;
Another end of the pipe wherein placed of the hose 5 is released into the space that surround the pipe 1.

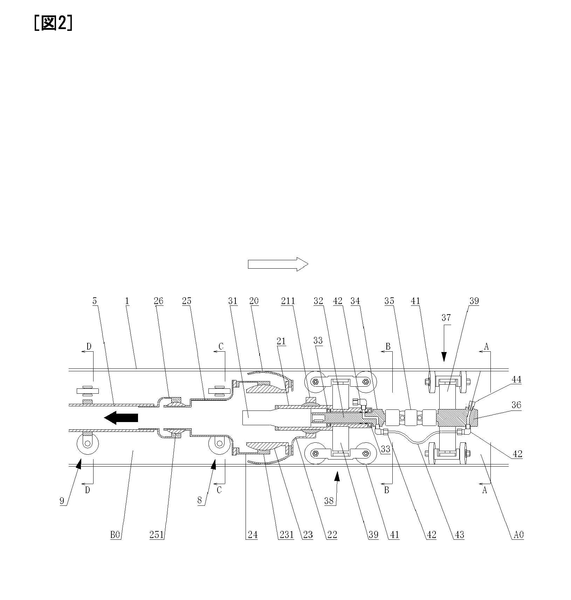

Describes in detail the configuration of the main unit 2 placed inside the pipe 1, referring to Fig. 2 through 10, comprising:
The first cylindrical body 21 of which axis is parallel to the axis of the pipe 1, wherein;
Disposed the cylindrical cavity inside the body 21, extending in the axial direction of the pipe;
Installed the geared air motor 31 in the cavity;
Installed the main drive shaft 32 in the cavity being supported by two ball bearings 33 which is fixed to the body 21, being connected to the output shaft of the geared air motor 31;
Installed the four sets of the non-rotating rod cylinders 39 as the components of the non-spinning wheel unit 38 on the periphery of the central portion of the first cylindrical body 21;
Installed the high-pressure tube fitting 42 on the periphery of the right end portion of the first cylindrical body 21:
The second cylindrical body 22, placed outside the periphery of the left portion of the first cylindrical body 21, wherein;
One end of the second cylindrical body 22 being connected to the first cylindrical body 21 via the first spherical bearing 211;
Another end of the second cylindrical body 22, being expanded the aperture of the end to be formed flange-like;
Disposed several holes in the circumference of the second cylindrical body 22:
The third cylindrical body 23, connected to the flange portion of the second cylindrical body 22:
The fourth cylindrical body 24, placed outside the periphery of the third cylindrical body 23, wherein;
One end of the fourth cylindrical body 24 being connected to the third cylindrical body 23 via the second spherical bearing 231;
Another end of the fourth cylindrical body 24 being formed flange-like: The fifth cylindrical body 25, wherein;
One end of the fifth cylindrical body 25 being connected to the flange of the fourth cylindrical body 24;
Another end of the fourth cylindrical body 24, being wilted the aperture of the end to be formed a cylindrical shape:
The hose connector 26, one end of which being connected to the fifth cylindrical body 25 via the third spherical bearing 251:
The hose 5 connected to the hose connector 26:
The pressure boundary seal 20 formed from a flexible material such as polyurethane, being fixed and sandwiched among the flange of the second cylindrical body 22 and the flange of the third cylindrical body 23, having the free-end portion 202 which is in contact with the surface of the pipe 1 after extending both in the direction close to the surface from the fixed portion 201and in the extending direction of hose 5:
The non-spinning wheel unit 38 equipped with the outer periphery of the central portion of the first cylindrical body 21:
The main drive shaft 32 being incorporated with the rotary joint 34 which ensures the flow of fluid between the rotating body - the high-pressure tube fitting 42 connected to the right end of the main drive shaft 32 - and the non-rotating body - the high-pressure tube fitting 42 connected to the first cylindrical body 21:
The universal joint 35 connected to the main drive shaft 32:
The driven shaft 36 connected to the universal joint 35, of which right end being equipped with the nozzle 44 to blast the cleaning material against the surface of the pipe, of which right end being equipped with the high-pressure tube fitting 42, being installed the four sets of the non-rotating rod cylinders 39 as the components of the spinning wheel unit 37 on the periphery of the driven shaft 36:
The nozzle 44 to blast the cleaning material such as water or abrasives against the surface of the pipe in order to clean the surface:
The spinning wheel unit 37 installed on the periphery of the driven shaft 36:
The high-pressure tube 43, being a concatenation of the high-pressure tube fitting 42 of the main drive shaft and the high-pressure tube fitting 42 of the driven shaft 36:
The guide wheel unit 8, being composed of three free-wheels 41 placed outside the periphery of the fifth cylindrical body 25:
A lot of the hose guide wheel units 9, each of which being composed of three free-wheels 41 placed outside the hose 5.
It should be noted that the pressure boundary seal 20 divides the space inside the pipe 1 into space (A) :A0 and space (B) :B0.
The space (A) is connected to the vacuum breaker 6 and the hose 5 is placed in the space (B).

Describes in detail the configuration of the spinning wheel unit 37, referring to Fig. 2 through 4, comprising:
Four sets of the non-rotating rod cylinders 39 being installed radially on the periphery of the driven shaft 36;
Two free-wheels 41 being installed in the each ends of the piston rods of the non-rotating rod cylinders 39:
Each axis of the free-wheels 41 is arranged in a cross at a small angle to the axis of the pipe 1.
Each of the non-rotating rod cylinders 39 has a function to push strongly the free-wheels 41 to the surface of the pipe 1.
In order to push the free-wheels to the surface, each of the non-rotating rod cylinders 39 has a compression coil spring which is placed inside each of the cylinders.
In order to push the free-wheels to the surface of the pipe 1 in another way,
each of the non-rotating rod cylinders 39 may be made as a non-rotating rod air cylinder, then the compressed air is supplied to the air cylinder via a rotary joint - not shown.

Describes in detail the configuration of the non-spinning wheel unit 38, referring to Fig. 2 through 3 and Fig. 5, comprising:
Four sets of the non-rotating rod cylinders 39 being installed radially on the outer periphery of the central portion of the first cylindrical body 21;
Two free-wheels 41 being installed in the each ends of the piston rods of the non-rotating rod cylinders 39:
Each axis of the free-wheels 41 is arranged in a cross at right angle to the axis of the pipe 1.
Each of the non-rotating rod cylinders 39 has a function to push strongly the free-wheels 41 to the surface of the pipe 1.
In order to push the free-wheels to the surface, each of the non-rotating rod cylinders 39 has a compression coil spring which is placed inside each of the cylinders.
In order to push the free-wheels to the surface of the pipe 1 in another way, each of the non-rotating rod cylinders 39 may be made as a non-rotating rod air cylinder, then the compressed air is supplied to the air cylinder via a rotary joint - not shown.

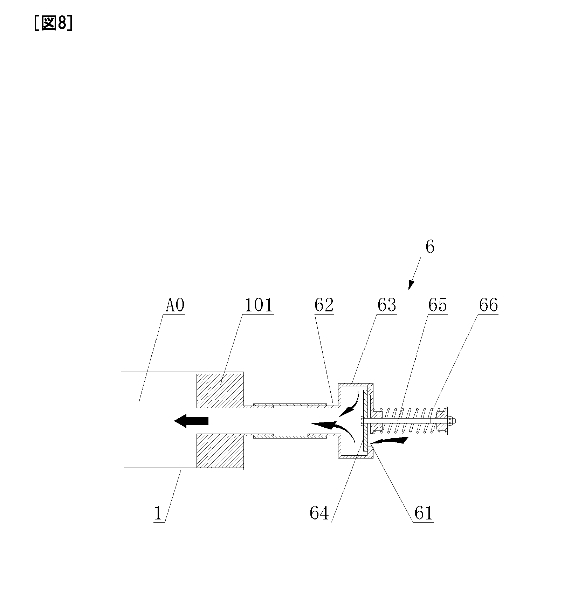

Describes in detail the configuration of well-known vacuum breaker 6, referring to Fig. 8, comprising:
Vacuum breaker 6 is comprised of a valve case 63 with a hose coupling 62 of downstream side and with a valve hole 61 of upstream side, a valve plate 64 placed inside the valve case 63, a valve rod 65 fixed to the valve plate 64, and a compression coil spring 66 pushing the valve plate 64 to the valve hole 61 strongly.

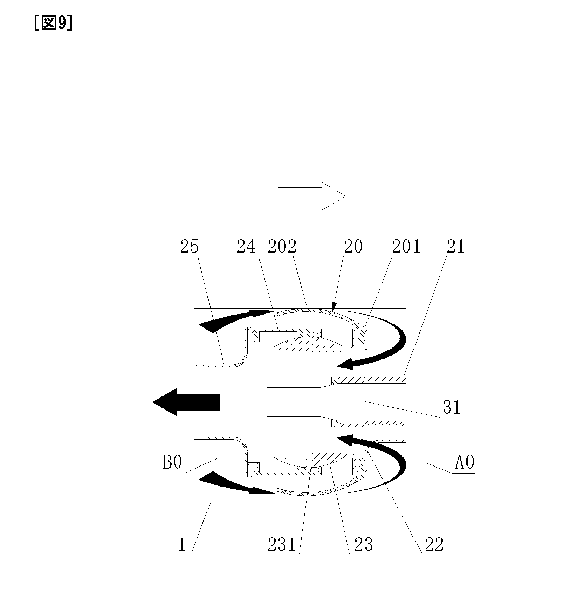

Describes in detail the actions of the first preferred embodiment of the "Working device for an internal pipe and working method for the same" described in the above, referring to Fig. 8 through 10:
Being activated the roots type vacuum pump 3 having sufficient suction air volume, the air inside the space (A):A0 is sucked toward the downstream side - in other words - in the direction of the roots type vacuum pump 3,
then the pressure in the space (A):A0 is reduced to the set pressure of the vacuum breaker 6.
In the following, it is assumed that the set pressure of the vacuum breaker 6 is - 200 mmHg.
Being reduced the pressure of the space (A):A0, the air inside the space (B):B0 flows into the space (A):A0 through a narrow gap between the surface of the pipe 1 and the free-end portion of the pressure boundary seal 20 as shown in Fig. 9.
The black arrow in the figure shows the direction that air flows through.
Because that the pressure of space (A):A0 is -200mmHg whereas the pressure of space (B):B0 is almost atmospheric pressure due to the space (B) being opened in the atmosphere, the free-end portion 202 of the pressure boundary seal 20 is pushed strongly to the surface of the pipe 1 due to difference in pressure of the space (A):A0 and the space (B):BO, thus there become a fewer the gaps between the surface of the pipe 1 and the pressure boundary seal 20.
Described below about the phenomenon to be caused by actual gap between the surface of the pipe 1 and the pressure boundary seal 20, the high-speed air flow flows from the space (B):B0 into the space (A):A0 through the narrow gap due to the irregularity and the wound formed by rust on the surface of the pipe 1 and the pressure boundary seal 20.
In the vacuum breaker 6 shown in Fig. 8, the atmosphere flowing into the vacuum breaker 6 due to that the pressure of the atmosphere overcomes power of compression coil spring 66 and pushes valve plate 64 open when the pressure of space (A):A0 becomes less than -200mmHg, thus the pressure of space (A) :A0 is maintained in -200mmHg.
Described more about an important phenomenon, the main unit 2 receives strong power to act on a course of space (A):A0 from space (B):B0 due to difference in pressure - 200mmHg - of the space (A):A0 and the space (B):B0.

In Fig. 2 through 5, the output shaft of the geared air motor 31 rotating clockwise in the state that looked at the right from the left in Fig. 2; the main drive shaft 32, the universal joint 35, the driven shaft 36 and the spinning wheel unit 37 are rotated clockwise, thus the free-wheels 41 equipped with the spinning wheel unit 37 rotate.
Then, the travelling force acts on the spinning wheel unit 37 toward the right direction from the left along the axis of the pipe 1 due to that each of the axis of the free-wheels 41 slightly inclines counterclockwise seeing from the direction of the outer periphery of the pipe 1.
Then, the non-spinning wheel unit 38 being forced hardly to be rotated counterclockwise by the reaction, however the rotation is prevented due to that the free-wheels 41 is not forced to be rotate because each axis of the free-wheels 41 is arranged in a cross at right angle to the axis of the pipe 1. Therefore, being rotated the geared air motor 31 clockwise in the state that looked at the right from the left in Fig. 2, the main unit 2 travels to the white arrow direction.
In the case of this situation, the total driving force of the main unit 2 toward the white arrow direction becomes very big due to that the driving force of the spinning wheel unit 37 is added to the driving force that push the main unit 2 toward the white arrow direction being caused by difference in pressure - 200mmHg.

Being supplied the cleaning material such as high-pressure water to the high-pressure tube fitting 42 equipped with the first cylindrical body 21; the high-pressure water is blasted strongly to the surface of the pipe 1 from the nozzle 44 after being transferring the water through the rotary joint 34, the high-pressure tube fitting 42 equipped with the main drive shaft 32, the high-pressure tube 43 and the high-pressure tube fitting 42 equipped with the driven shaft 36; thus the surface of the pipe 1 is cleaned due to removed the rust or other foreign matter from the surface of the pipe 1 by high-pressure water-jetting.
Being transferred the suction air from the vacuum breaker 6 to the roots type vacuum pump 3 through the space (A):A0, the space (B):B0, the hose 5 and the solid fluid separator 4, the clean air is released into the atmosphere from the exit of the roots type vacuum pump 3 after separated the air from the removed particle and the drainage by the solid-fluid separator 4.
Described more about an important phenomenon, the high-speed air flow flowing from the space (B):B0 into the space (A):A0 through the narrow gap between the surface of the pipe 1 and the pressure boundary seal 20, thus the wet surface of the pipe 1 is dried forcibly by the action of the high-speed air flow.

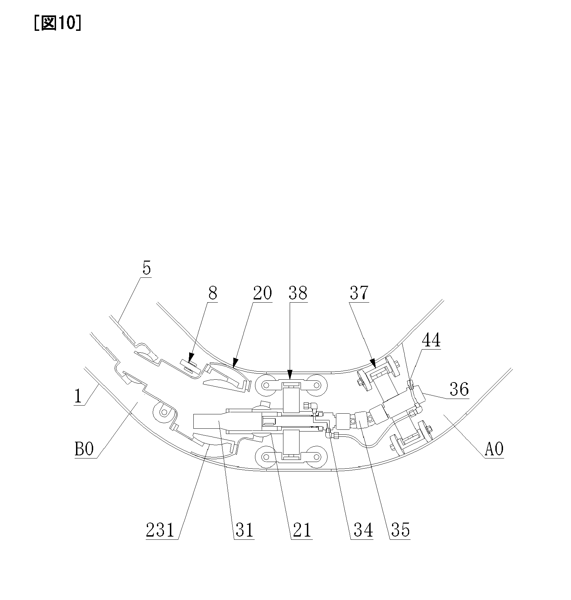

In Fig. 10 that is a section view showing an embodiment of the main unit 2 shown in Fig. 2 located at the bend portion of the pipe 1, the free-end portion 202 of the pressure boundary seal 20 can always adhere to the surface of the pipe 1 because that the axis of the pressure boundary seal 20 is located near the axis of the pipe 1 even in the bend due to that the pressure boundary seal 20 is affixed to the main body of the main unit 2 via the spherical bearing.

The second preferred embodiment of the "Working device for an internal pipe and working method for the same" configured according to the present invention will be described in detail below, referring to the figures attached hereto.

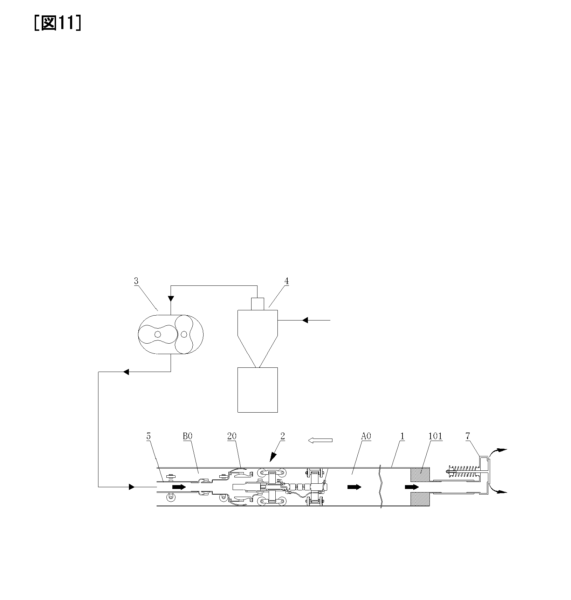

Fig. 11 is a overall view of the second preferred embodiment of the "Working device for an internal pipe and working method for the same" configured according to the present invention, showing the main unit 2 and ancillary related equipments.

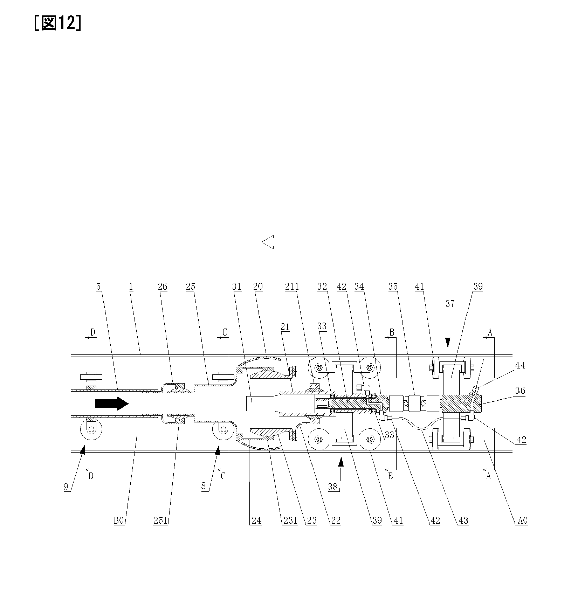

Fig. 12 is an enlarged section view of the main unit 2 shown in Fig. 11.

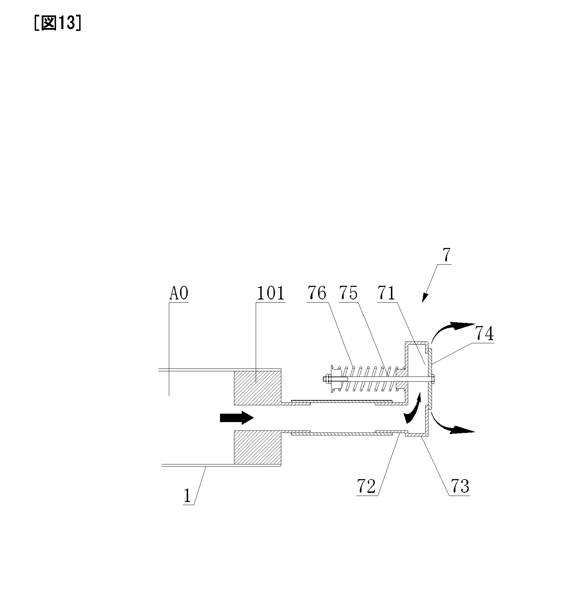

Fig. 13 is an enlarged section view of the relief valve 7 shown in Fig. 11.

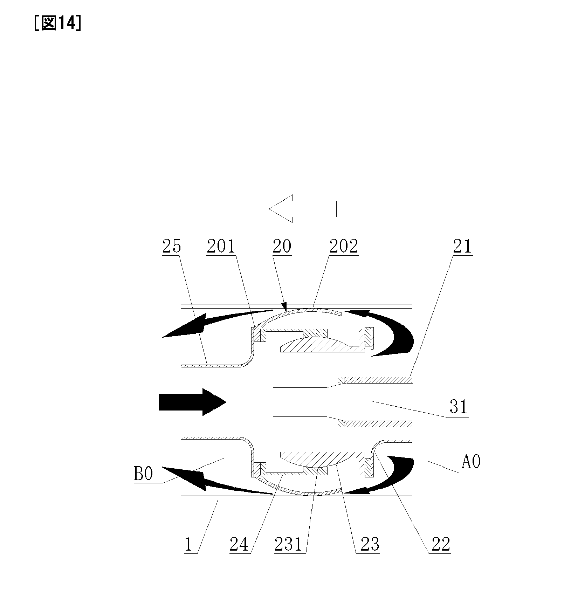

Fig. 14 is an enlarged section view of the pressure boundary seal of the main unit 2 shown in Fig. 12.
In a difference with the main unit 2 of the first preferred embodiment and the main unit 2 of the second preferred embodiment, the constitution of the other parts is the same except the placement of the pressure boundary seal 20. Therefore, the drawings are omitted here except the drawings being related to the placement of the pressure boundary seal 20.

In Fig. 11, the second preferred embodiment of the "Working device for an internal pipe and working method for the same" configured according to the present invention, comprising:
The main unit 2 placed inside the pipe;
The hose 5, of which downstream end being connected to the main unit 2,
of which upstream end being connected to the outlet of the roots type pump 3;
The roots type pump 3 as a type of the positive-displacement pumps;
The relief valve 7, being connected to one end of the pipe wherein the hose 5 is not placed;
Another end of the pipe wherein placed of the hose 5 is released into the space that surround the pipe 1.

Describes in detail the configuration of the main unit 2 placed inside the pipe 1, referring to Fig. 12 and Fig. 14, comprising:
The first cylindrical body 21 of which axis is parallel to the axis of the pipe 1, wherein;
Disposed the cylindrical cavity inside the body 21, extending in the axial direction of the pipe;
Installed the geared air motor 31 in the cavity;
Installed the main drive shaft 32 in the cavity being supported by two ball bearings 33 which is fixed to the body 21, being connected to the output shaft of the geared air motor 31;
Installed the four sets of the non-rotating rod cylinders 39 as the components of the non-spinning wheel unit 38 on the periphery of the central portion of the first cylindrical body 21;
Installed the high-pressure tube fitting 42 on the periphery of the right end portion of the first cylindrical body 21:
The second cylindrical body 22, placed outside the periphery of the left portion of the first cylindrical body 21, wherein;
One end of the second cylindrical body 22 being connected to the first cylindrical body 21 via the first spherical bearing 211;
Another end of the second cylindrical body 22, being expanded the aperture of the end to be formed flange-like;
Disposed several holes in the circumference of the second cylindrical body 22:
The third cylindrical body 23, connected to the flange portion of the second cylindrical body 22:
The fourth cylindrical body 24, placed outside the periphery of the third cylindrical body 23, wherein;
One end of the fourth cylindrical body 24 being connected to the third cylindrical body 23 via the second spherical bearing 231;
Another end of the fourth cylindrical body 24 being formed flange-like: The fifth cylindrical body 25, wherein;
One end of the fifth cylindrical body 25 being connected to the flange of the fourth cylindrical body 24;
Another end of the fourth cylindrical body 24, being wilted the aperture of the end to be formed a cylindrical shape:
The hose connector 26, one end of which being connected to the fifth cylindrical body 25 via the third spherical bearing 251:
The hose 5 connected to the hose connector 26:
The pressure boundary seal 20 formed from a flexible material such as polyurethane, being fixed and sandwiched among the flange of the fourth cylindrical body 24 and the flange of the fifth cylindrical body 25, having the free-end portion 202 which is in contact with the surface of the pipe 1 after extending both in the direction close to the surface from the fixed portion 201and in the extending direction of hose 5:
The non-spinning wheel unit 38 equipped with the outer periphery of the central portion of the first cylindrical body 21:
The main drive shaft 32 being incorporated with the rotary joint 34 which ensures the flow of fluid between the rotating body - the high-pressure tube fitting 42 connected to the right end of the main drive shaft 32 - and the non-rotating body - the high-pressure tube fitting 42 connected to the first cylindrical body 21:
The universal joint 35 connected to the main drive shaft 32:
The driven shaft 36 connected to the universal joint 35, of which right end being equipped with the nozzle 44 to spray the coating material to the surface of the pipe, of which right end being equipped with the high-pressure tube fitting 42, being installed the four sets of the non-rotating rod cylinders 39 as the components of the spinning wheel unit 37 on the periphery of the driven shaft 36:
The nozzle 44 to spray the coating material such as paint or corrosion resistance alloy to the surface of the pipe in order to coat the surface:
The spinning wheel unit 37 installed on the periphery of the driven shaft 36:
The high-pressure tube 43, being a concatenation of the high-pressure tube fitting 42 of the main drive shaft and the high-pressure tube fitting 42 of the driven shaft 36:
The guide wheel unit 8, being composed of three free-wheels 41 placed outside the periphery of the fifth cylindrical body 25:
A lot of the hose guide wheel units 9, each of which being composed of three free-wheels 41 placed outside the hose 5.
It should be noted that the pressure boundary seal 20 divides the space inside the pipe 1 into space (A) :A0 and space (B) :B0.
The space (A) is connected to the relief valve 7 and the hose 5 is placed in the space (B).

Describes in detail the configuration of the spinning wheel unit 37, referring to Fig. 2 through 4, comprising:
Four sets of the non-rotating rod cylinders 39 being installed radially on the periphery of the driven shaft 36;
Two free-wheels 41 being installed in the each ends of the piston rods of the non-rotating rod cylinders 39:
Each axis of the free-wheels 41 is arranged in a cross at a small angle to the axis of the pipe 1.
Each of the non-rotating rod cylinders 39 has a function to push strongly the free-wheels 41 to the surface of the pipe 1.
In order to push the free-wheels to the surface, each of the non-rotating rod cylinders 39 has a compression coil spring which is placed inside each of the cylinders.
In order to push the free-wheels to the surface of the pipe 1 in another way,
each of the non-rotating rod cylinders 39 may be made as a non-rotating rod air cylinder, then the compressed air is supplied to the air cylinder via a rotary joint - not shown.

Describes in detail the configuration of the non-spinning wheel unit 38, referring to Fig. 2 through 3 and Fig. 5, comprising:
Four sets of the non-rotating rod cylinders 39 being installed radially on the outer periphery of the central portion of the first cylindrical body 21;
Two free-wheels 41 being installed in the each ends of the piston rods of the non-rotating rod cylinders 39:
Each axis of the free-wheels 41 is arranged in a cross at right angle to the axis of the pipe 1.
Each of the non-rotating rod cylinders 39 has a function to push strongly the free-wheels 41 to the surface of the pipe 1.
In order to push the free-wheels to the surface, each of the non-rotating rod cylinders 39 has a compression coil spring which is placed inside each of the cylinders.
In order to push the free-wheels to the surface of the pipe 1 in another way, each of the non-rotating rod cylinders 39 may be made as a non-rotating rod air cylinder, then the compressed air is supplied to the air cylinder via a rotary joint - not shown.

Describes in detail the configuration of well-known relief valve 7, referring to Fig. 13, comprising:
The relief valve 7 is comprised of a valve case 73 with a hose coupling 72 of the upstream side and with a valve hole 71 of the downstream side, a valve plate 74 placed outside the valve case 73, a valve rod 75 fixed to the valve plate 74, and a compression coil spring 76 pulling the valve plate 74 to the valve hole 71 strongly.

Describes in detail the actions of the second preferred embodiment of the "Working device for an internal pipe and working method for the same" described in the above, referring to Fig. 11 through 14:
Being activated the roots type pump 3 having sufficient delivery air volume, the atmosphere is delivered into the space (A): A0 by the pump 3, then the pressure in the space (A): A0 is increased to the set pressure of the relief valve 7.
In the following, it is assumed that the set pressure of the relief valve is 200 mmHg.
Being increased the pressure of the space (A): A0, the air inside the space (A): A0 flows into the space (B): B0 through a narrow gap between the surface of the pipe 1 and the free-end portion of the pressure boundary seal 20 as shown in Fig. 14.
The black arrow in the figure shows the direction that air flows through.
Because that the pressure of space (A):A0 is 200mmHg whereas the pressure of space (B):B0 is almost atmospheric pressure due to the space (B) being opened in the atmosphere, the free-end portion 202 of the pressure boundary seal 20 is pushed strongly to the surface of the pipe 1 due to difference in pressure of the space (A) :A0 and the space (B):BO, thus there become a fewer the gaps between the surface of the pipe 1 and the pressure boundary seal 20.
Described below about the phenomenon to be caused by actual gap between the surface of the pipe 1 and the pressure boundary seal 20, the high-speed air flow flows from the space (A): A0 into the space (B): B0 through the narrow gap due to the irregularity and the wound formed by rust on the surface of the pipe 1 and the pressure boundary seal 20.
In the relief valve 7 shown in Fig. 13, the air of the space (A) flowing out into the outside of the relief valve 7 due to that the pressure of the air of the space (A) overcomes power of compression coil spring 76 and pushes valve plate 74 open when the pressure of space (A): A0 becomes over than 200mmHg, thus the pressure of space (A): A0 is maintained in 200mmHg. Described more about an important phenomenon, the main unit 2 receives strong power to act on a course of space (B): B0 from space (A): A0 due to difference in pressure - 200mmHg - of the space (A):A0 and the space (B):B0.

In Fig. 12, Fig. 4 and Fig. 5, the output shaft of the geared air motor 31 rotating counterclockwise in the state that looked at the right from the left in Fig. 12; the main drive shaft 32, the universal joint 35, the driven shaft 36 and the spinning wheel unit 37 are rotated counterclockwise, thus the free-wheels 41 equipped with the spinning wheel unit 37 rotate.
Then, the travelling force acts on the spinning wheel unit 37 toward the left direction from the right along the axis of the pipe 1 due to that each of the axis of the free-wheels 41 slightly inclines counterclockwise seeing from the direction of the outer periphery of the pipe 1.
Then, the non-spinning wheel unit 38 being forced hardly to be rotated clockwise by the reaction, however the rotation is prevented due to that the free-wheels 41 is not forced to be rotate because each axis of the free-wheels 41 is arranged in a cross at right angle to the axis of the pipe 1. Therefore, being rotated the geared air motor 31 counterclockwise in the state that looked at the right from the left in Fig. 12, the main unit 2 travels to the white arrow direction.
In the case of this situation, the total driving force of the main unit 2 toward the white arrow direction becomes very big due to that the driving force of the spinning wheel unit 37 is added to the driving force that push the main unit 2 toward the white arrow direction being caused by difference in pressure - 200mmHg.

Being supplied the coating material such as paint to the high-pressure tube fitting 42 equipped with the first cylindrical body 21; the paint is sprayed to the surface of the pipe 1 from the nozzle 44 after being transferring the paint through the rotary joint 34, the high-pressure tube fitting 42 equipped with the main drive shaft 32, the high-pressure tube 43 and the high-pressure tube fitting 42 equipped with the driven shaft 36; thus the surface of the pipe 1 is coated.
Described more about an important phenomenon, the high-speed air flow flowing from the space (A): A0 into the space (B): B0 through the narrow gap between the surface of the pipe 1 and the pressure boundary seal 20, thus the wet surface of the pipe 1 is dried forcibly by the action of the high-speed and high temperature air flow.
The painting dries early by the action of the high-speed and high temperature air flow that is transferred from the roots type pump 3 to the relief valve 7 via the hose 5, the space (B): B0 and the space (A): A0. Being explained further, the delivery pump for air has the function to compress the inhaled air.
Being compressed the air inside the pump, the discharged air is heated. Therefore, the hot air is delivered into the space (A) from the delivery pump.

The first preferred embodiment of the "Working device for an internal pipe and working method for the same" configured according to the present invention as described in the above, being useful for the first process of repair work for the surface inside the pipe, in that process the surface is cleaned by being blasted the water or the abrasives.
The second preferred embodiment of the "Working device for an internal pipe and working method for the same" configured according to the present invention as described in the above, being useful for the second process of repair work for the surface inside the pipe, in that process the surface is coated by coating materials such as paint or corrosion resistant alloys. Accordingly it is very convenient that both of the function of the main unit of the first preferred embodiment and the function of the main unit of the second preferred embodiment are included in the same device.
Described below the difference with the main unit of the first preferred embodiment and the main unit of the second preferred embodiment:
In the main unit of the first preferred embodiment, the pressure boundary seal has the free-end portion which is in contact with the surface of the pipe after extending both in the direction close to the surface from the fixed portion of the seal and in the extending direction of the hose.
In the main unit of the second preferred embodiment, the pressure boundary seal has the free-end portion which is in contact with the surface of the pipe after extending both in the direction close to the surface from the fixed portion of the seal and in the opposite direction of the extending direction of the hose.
After all, the main unit of the first preferred embodiment is different from the main unit of the second preferred embodiment in point that "the free-end portion of the pressure boundary seal is extending in the extending direction of the hose" or "the free-end portion of the pressure boundary seal is extending in the opposite direction of the extending direction of the hose".
In order to get only one device which possessed both functions of the main unit of the first preferred embodiment and the main unit of the second preferred embodiment, suggested below the third preferred embodiment and the fourth preferred embodiment of the "Working device for an internal pipe and working method for the same" configured according to the present invention.

Describes in detail the third preferred embodiment of the "Working device for an internal pipe and working method for the same" referring to the figures attached hereto:

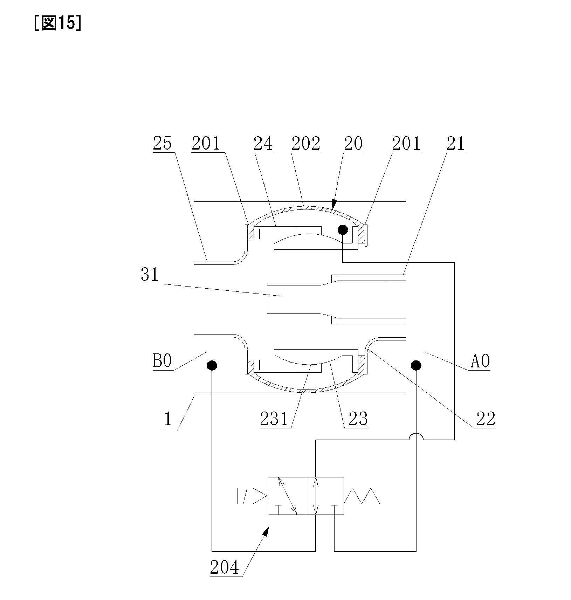

Fig. 15 is an enlarged section view of the pressure boundary seal showing another embodiment of the seal which is different from the seal shown in Fig. 9 and Fig. 14.
In a difference with the main units of the first and second preferred embodiment and the main unit of the third preferred embodiment, the constitution of the other parts is the same except the placement of the pressure boundary seal. Therefore, the drawings are omitted here except the drawings being related to the placement of the pressure boundary seal.
In Fig. 15, the pressure boundary seal 20 is composed of a free-end outer portion 202 and two inner portions 201, the free-end outer portion 202 having an arc-shape in cross section, two ends of the arc-portion being fixed to the main body of the main unit of the working device, the two ends of the arc-portion being the same as the two inner portions 201, each end of the two ends of the arc-shaped portion extending in the direction of the surface of the pipe 1, the two extending portions being combined and becoming one at the most extended part;
there is the "Solenoid valve with three ports and two positions" connecting selectively the space (B):B0 to the space 203 inside the pressure boundary seal or connecting selectively the space (A):A0 to the space 203 inside the pressure boundary seal.
In the first preferred embodiment, the "Solenoid valve with three ports and two positions" connects the space (B):B0 to the space 203.
In the second preferred embodiment, the "Solenoid valve with three ports and two positions" connects the space (A) :A0 to the space 203.
It is convenient without the solenoid valve if there is the means in that means the space (B):B0 is connected to the space 203 in the first preferred embodiment, the space (A):A0 is connected to the space 203 in the second preferred embodiment.

The fourth preferred embodiment of the "Working device for an internal pipe and working method for the same" configured according to the present invention will be described in detail below, referring to the figures attached hereto.

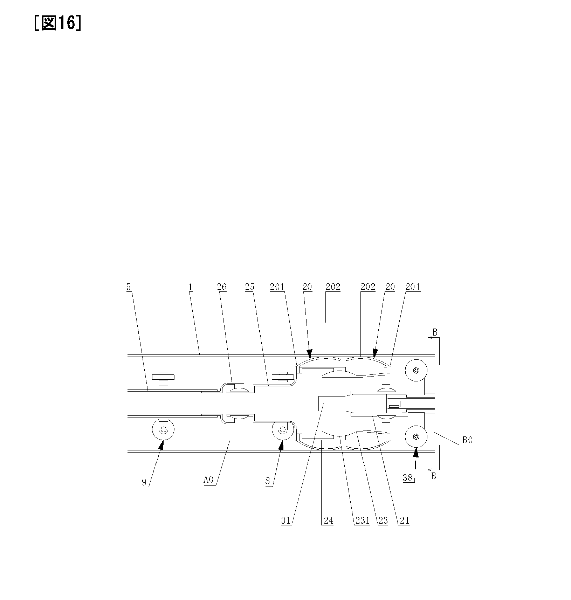

Fig. 16 is an enlarged section view of the main unit showing another embodiment of the unit which is different from the unit shown in Fig. 1 and Fig. 11.

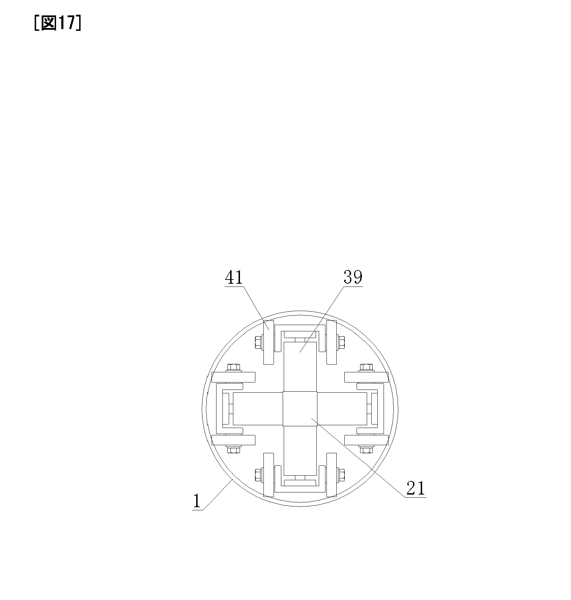

Fig. 17 is a side view from the arrows B - B of the main unit shown in Fig. 16.
In a difference with the main unit of the first, second and third preferred embodiment and the main unit of the fourth preferred embodiment, the constitution of the other parts is the same except the pressure boundary seal and the non-spinning wheel unit. Therefore, the drawings are omitted here except the drawings being related to the pressure boundary seal and the non-spinning wheel unit.
The main unit of the fourth preferred embodiment is different from the main unit of the first, second and third preferred embodiment in point that the main unit of the fourth preferred embodiment has two pressure boundary seals. The alteration of the shape of the non-spinning wheel unit is caused by that the unit is equipped with the two pressure boundary seals.
Describes in detail the configuration of the non-spinning wheel unit of the fourth preferred embodiment shown in Fig. 16 through 17, comprising:
Four sets of the non-rotating rod cylinders 39 being installed radially on the outer periphery of the central portion of the first cylindrical body 21;
Two free-wheels 41 being installed in the each ends of the piston rods of the non-rotating rod cylinders 39:
Each axis of the free-wheels 41 is arranged in a cross at right angle to the axis of the pipe 1.
In order to push the free-wheels to the surface, each of the non-rotating rod cylinders 39 has a compression coil spring which is placed inside each of the cylinders.
In order to push the free-wheels to the surface of the pipe 1 in another way, each of the non-rotating rod cylinders 39 may be made as a non-rotating rod air cylinder, then the compressed air is supplied to the air cylinder via a rotary joint - not shown.
The main unit of the fourth preferred embodiment has two pressure boundary seals as described below:
The pressure boundary seal 20A formed from a flexible material such as polyurethane, being fixed and sandwiched among the flange of the second cylindrical body 22 and the flange of the third cylindrical body 23, having the free-end portion 202 which is in contact with the surface of the pipe 1 after extending both in the direction close to the surface from the fixed portion 201 and in the extending direction of hose 5:
The pressure boundary seal 20B formed from a flexible material such as polyurethane, being fixed and sandwiched among the flange of the fourth cylindrical body 24 and the flange of the fifth cylindrical body 25, having the free-end portion 202 which is in contact with the surface of the pipe 1 after extending both in the direction close to the surface from the fixed portion 201 and in the counter direction of the extending direction of hose 5:
In the first preferred embodiment, the free-end portion 202 of the pressure boundary seal 20A has a function as a seal due to that the free-end portion 202 is pushed strongly to the surface of the pipe 1 due to the difference in pressure of the space (A):A0 and the space (B):B0.
However, in the second preferred embodiment, the free-end portion 202 of the pressure boundary seal 20A has not function as a seal due to that the free-end portion 202 is not pushed to the surface of the pipe 1.
In the first preferred embodiment, the free-end portion 202 of the pressure boundary seal 20B has not function as a seal due to that the free-end portion 202 is not pushed to the surface of the pipe 1.
However, in the second preferred embodiment, the free-end portion 202 of the pressure boundary seal 20B has a function as a seal due to that the free-end portion 202 is pushed strongly to the surface of the pipe 1 due to the difference in pressure of the space (A) :A0 and the space (B):B0.

The "Working device for an internal pipe and working method for the same" may be equipped with both a vacuum breaker and a relief valve at the end of the pipe being still equipped with a vacuum breaker or a relief valve.
Because the function of the vacuum breaker is not lost even though the relief valve is newly equipped with the end of the pipe with which the vacuum breaker is already equipped.
Because, on the other hand, the function of the relief valve is not lost even though the vacuum breaker is newly equipped with the end of the pipe with which the relief valve is already equipped.

The preferred embodiments of the present invention are described in the above, however it is possible to conceive the other various embodiments based on the scope of the claims.
In the first and second preferred embodiments, the main unit has the spinning wheel unit and the non-spinning wheel unit as the means to make the main unit to move inside the pipe.
Describes in detail the configuration of the spinning wheel unit, comprising:
Four sets of the non-rotating rod cylinders being installed radially on the periphery of the rotating body;
Two free-wheels being installed in the each ends of the piston rods of the non-rotating rod cylinders;
Each axis of the free-wheels is arranged in a cross at a small angle to the axis of the pipe;
The means to extend the piston rods of the non-rotating rod cylinders in order to push strongly the free-wheels to the surface of the pipe such as the means to supply the pressure fluid to the cylinders or the compression coil spring which is placed inside each of the cylinders.
Describes in detail the configuration of the non-spinning wheel unit, comprising:
Four sets of the non-rotating rod cylinders being installed radially on the periphery of the non-rotating body;
Two free-wheels being installed in the each ends of the piston rods of the non-rotating rod cylinders;
Each axis of the free-wheels is arranged in a cross at right angle to the axis of the pipe;
The means to extend the piston rods of the non-rotating rod cylinders in order to push strongly the free-wheels to the surface of the pipe such as the means to supply the pressure fluid to the cylinders or the compression coil spring which is placed inside each of the cylinders.
As to the means to make the main unit to travel inside the pipe, it is not limited to the means described in the above.
For example, a winch may be used to move the main unit along the pipe by pulling the main unit via a wire rope which is wound off by the winch.
The descriptions in the above of the preferred embodiments of the present invention assumed that the device of the present invention existed in the atmosphere, but the device of the present invention may be applied underwater.

This invention relates to a working device or a working method capable of moving along the surface of an internal pipe, having a repair device/s that acts on the surface of the internal pipe, such a repair device may be a cleaning device to remove foreign matter such as rust or aquatic organisms attached to the internal pipe such as a clear-water pipe, drainage or gas pipe, and such a repair device also may be a coating device to spray coating material such as paint or corrosion resistant alloys to the surface of the internal pipe after removing the foreign matter.

### BRIEF DESCRIPTION OF THE DRAWING

Fig. 1 is a overall view of the first preferred embodiment of the "Working device for an internal pipe and working method for the same" configured according to the present invention, showing the configuration of the first preferred embodiment of the working device that includes the main unit and ancillary related equipments.
Fig. 2 is an enlarged section view of the main unit of the working device shown in Fig. 1.

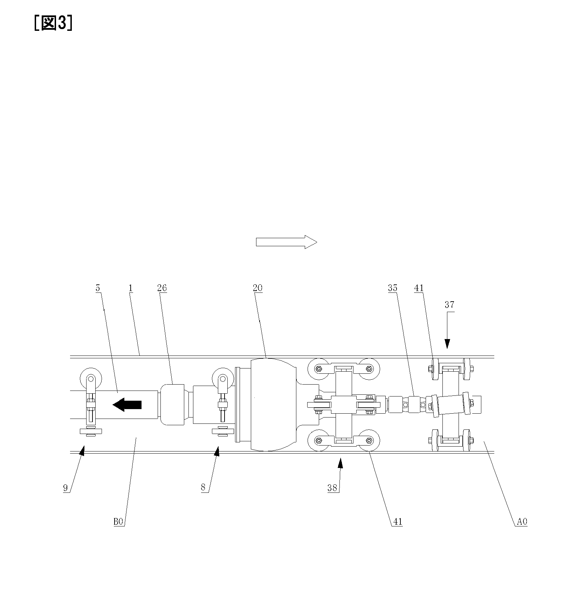

Fig. 3 is a top view of the main unit shown in Fig. 2.

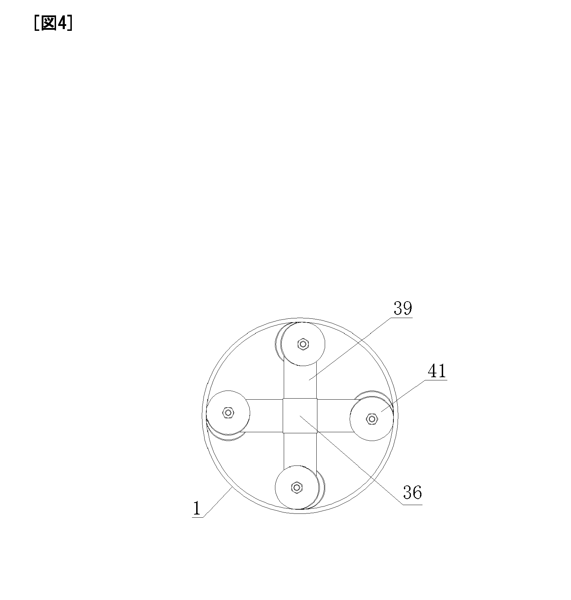

Fig. 4 is a side view from the arrows A - A of the main unit shown in Fig. 2.

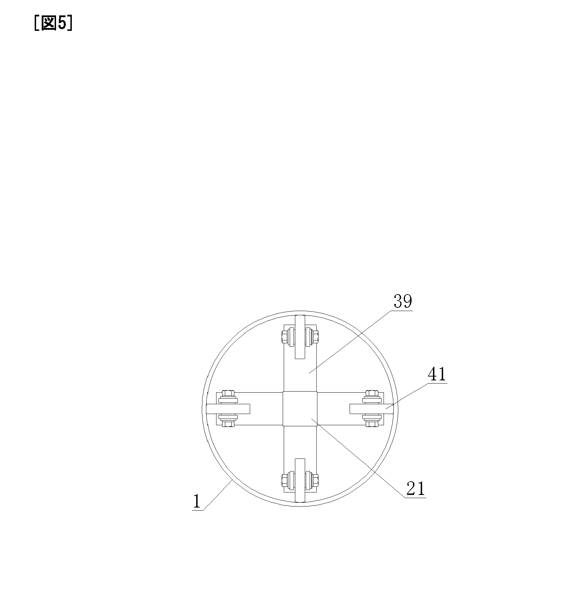

Fig. 5 is a side view from the arrows B - B of the main unit shown in Fig. 2.

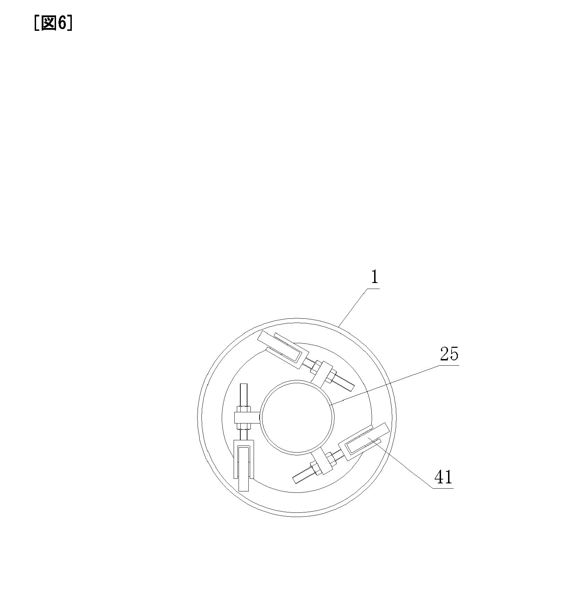

Fig. 6 is a side view from the arrows C - C of the main unit shown in Fig. 2.

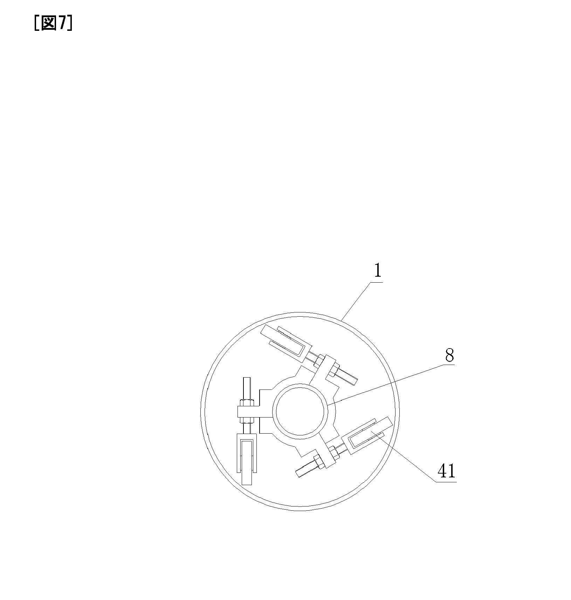

Fig. 7 is a side view from the arrows D - D of the main unit shown in Fig. 2.
Fig. 8 is an enlarged section view of the vacuum breaker shown in Fig. 1.
Fig. 9 is an enlarged section view of the pressure boundary seal shown in Fig. 2.
Fig. 10 is a section view showing an embodiment of the main unit shown in Fig. 2 at the bend portion of the pipe.
Fig. 11 is a overall view of the second preferred embodiment of the "Working device for an internal pipe and working method for the same" configured according to the present invention, showing the main unit 2 and ancillary related equipments.
Fig. 12 is an enlarged section view of the main unit 2 shown in Fig. 11.
Fig. 13 is an enlarged section view of the relief valve 7 shown in Fig. 11.
Fig. 14 is an enlarged section view of the pressure boundary seal of the main unit 2 shown in Fig. 12.
Fig. 15 is an enlarged section view of the pressure boundary seal showing another embodiment of the seal which is different from the seal shown in Fig. 9 and Fig. 14.
Fig. 16 is an enlarged section view of the main unit showing another embodiment of the unit which is different from the unit shown in Fig. 1 and Fig. 11.
Fig. 17 is a side view from the arrows B - B of the main unit shown in Fig. 16.

### REFERENCE NUMERALS OR MARKES

A0 space(A); B0 space(B); 1 pipe; 101 end plug of pipe; 3 roots type pump; 4 solid fluid separation device; 5 hose; 8 guide wheel unit; 9 guide wheel unit for hose; 6 vacuum breaker; 61 upstream side valve hole; 62 downstream side hose connector; 63 valve case; 64 valve plate; 65 valve rod fixed to valve plate; 66 compression coil spring; 7 relief valve; 71 downstream side valve hole; 72 upstream side hose connector; 73 valve case; 74 valve plate; 75 valve rod fixed to valve plate; 76 compression coil spring; 2 main unit; 20 pressure boundary seal; 201 fixed portion; 202 free-end portion; 203 space inside pressure boundary seal; 204 single solenoid valve with three ports and two positions; 31 geared air motor; 31 main drive shaft; 33 ball bearing; 34 rotary joint; 35 universal joint; 36 driven shaft; 21 the first cylindrical body; 22 the second cylindrical body; 23 the third cylindrical body; 24 the fourth cylindrical body; 25 the fifth cylindrical body; 26 hose connector; 211 the first spherical bearing; 231 the second spherical bearing; 251 the third spherical bearing; 37 spinning wheel unit; 38 non-spinning wheel unit; 41 driven wheel; 42 high pressure tube fitting; 43 high pressure tube; 44 nozzle.

## Claims

1. A working device capable of moving along the surface of an internal pipe, comprising:
An annular pressure boundary seal, free-end outer portion of which comes into contact with the surface of the internal pipe, inner portion of which is fixed to the main body of the main unit of the working device;
wherein the seal separates the space inside the pipe into two spaces, space (A) and space (B), using the seal as a boundary;
the end portion of space (A) adjacent to the seal, being connected with a suction pump via a hose;
the other end portion of space (A), which is not adjacent to the seal, being connected with the fluid surrounding the pipe via a vacuum breaker that adjusts the negative pressure within space (A);
the hose, being disposed in space (B);
the end portion of space (B), which is not adjacent to the seal, being connected with the fluid that surrounds the pipe.

2. A working device capable of moving along the surface of an internal pipe described in Claims 1, wherein:
The annular pressure boundary seal is composed of at least a free-end outer portion and an inner portion, the free-end outer portion being in contact with the surface of the pipe after extending both in a direction close to the surface from the inner portion and in a direction away from space (A) in cross-section cut parallel to the axis of the pipe, the inner portion being fixed to the main body of the main unit of the working device.

3. A working device capable of moving along the surface of an internal pipe described in Claims 1, wherein:
The annular pressure boundary seal is composed of a free-end outer portion and two inner portions, the free-end outer portion having an arc-shape in cross section, two ends of the arc-portion being fixed to the main body of the main unit of the working device, the two ends of the arc-portion being the same as the two inner portions, each end of the two ends of the arc-shaped portion extending in the direction of the surface of the pipe, the two extending portions being combined and becoming one at the most extended part;
there is a valve which connects space (B) to a space inside the annular pressure boundary seal.

4. A working device capable of moving along the surface of an internal pipe described in Claims 1 through 3, wherein:
The annular pressure boundary seal is affixed to the main body of the main unit of the working device via a spherical bearing in order that the axis of the seal is to be located near the axis of the pipe even in the bend.

5. A working device capable of moving along the surface of an internal pipe described in Claims 1 through 4, wherein:
The working device is equipped with a means to blast cleaning materials such as water or abrasives in order to clean the surface inside the pipe.

6. A working device capable of moving along the surface of an internal pipe, comprising:
An annular pressure boundary seal, free-end outer portion of which comes into contact with the surface of the internal pipe, inner portion of which is fixed to the main body of the main unit of the working device;
wherein the seal separates the space inside the pipe into two spaces, space (A) and space (B), using the seal as a boundary;
the end portion of space (A) adjacent to the seal, being connected with a delivery pump via a hose;
the other end portion of space (A), which is not adjacent to the seal, being connected with the fluid surrounding the pipe via a relief valve that adjusts the positive pressure within space (A);
the hose, being disposed in space (B);
the end portion of space (B), which is not adjacent to the seal, being connected with the fluid that surrounds the pipe.

7. A working device capable of moving along the surface of an internal pipe described in Claims 6, wherein:
The annular pressure boundary seal is composed of at least a free-end outer portion and an inner portion, the free-end outer portion being in contact with the surface of the pipe after extending both in a direction close to the surface from the inner portion and in a direction away from space (A) in cross-section cut parallel to the axis of the pipe, the inner portion being fixed to the main body of the main unit of the working device.

8. A working device capable of moving along the surface of an internal pipe described in Claims 6, wherein:
The annular pressure boundary seal is composed of a free-end outer portion and two inner portions, the free-end outer portion having an arc-shape in cross section, two ends of the arc-portion being fixed to the main body of the main unit of the working device, the two ends of the arc-portion being the same as the two inner portions, each end of the two ends of the arc-shaped portion extending in the direction of the surface of the pipe, the two extending portions being combined and becoming one at the most extended part;
there is a valve which connects space (A) to a space inside the annular pressure boundary seal.

9. A working device capable of moving along the surface of an internal pipe described in Claims 6 through 8, wherein:
The annular pressure boundary seal is affixed to the main body of the main unit of the working device via a spherical bearing in order that the axis of the seal is to be located near the axis of the pipe even in the bend.

10. A working device capable of moving along the surface of an internal pipe described in Claims 6 through 8, wherein:
The working device is equipped with a means of coating materials such as paint or corrosion resistant alloys in order to apply a coating to the surface inside the pipe.

11. A working device capable of moving along the surface of an internal pipe, comprising:
The first process to clean the surface of the pipe, that process is carried out from space (B) toward space (A) by using the working device capable of moving along the pipe being equipped with a means to blast cleaning materials such as water or abrasives in order to clean the surface inside the pipe that working device is described in Claims 1 through 5;
The second process to apply a coating to the surface of the pipe, that process is carried out from space (A) toward space (B) by using the working device capable of moving along the pipe being equipped with a means of coating materials such as paint or corrosion resistant alloys in order to apply a coating to the surface inside the pipe that working device is described in Claims 6 through 10;

12. A working device capable of moving along the surface of an internal pipe described in Claims 1 through 11, wherein:
The working device is equipped with a means to be moved along the pipe, that means comprising a spinning wheel unit and a non-spinning wheel unit:
The spinning wheel unit, comprising:
A plurality of non-rotating rod cylinders that is radially arranged on the outer periphery of the rotating body;
Free-wheels, each of the free-wheels being equipped with the each of the non-rotating rod cylinders, each axis of the free-wheels being arranged in a cross at a small angle to the axis of the pipe;
Means to push the each of the free-wheels to the surface of the pipe, one example of the means being composed by means to supply the pressure fluid to the each of the non-rotating rod cylinders, another example of the means being composed by a compression coil spring which is placed inside the each of the non-rotating rod cylinders:
The non-spinning wheel unit, comprising:
A plurality of non-rotating rod cylinders that is radially arranged on the outer periphery of the non-rotating body;
Free-wheels, each of the free-wheels being equipped with the each of the non-rotating rod cylinders, each axis of the free-wheels being arranged in a cross at right angle to the axis of the pipe;
Means to push the each of the free-wheels to the surface of the pipe, one example of the means being composed by means to supply the pressure fluid to the each of the non-rotating rod cylinders, another example of the means being composed by a compression coil spring which is placed inside the each of the non-rotating rod cylinders.

13. A working device capable of moving along the surface of an internal pipe described in Claims 1 through 12, wherein:
The working device is equipped with two annular pressure boundary seals:
One of the annular pressure boundary seals, comprising:
One of the annular pressure boundary seals is composed of at least a free-end outer portion and an inner portion, the free-end outer portion being in contact with the surface of the pipe after extending both in a direction close to the surface from the inner portion and in a direction away from space (A) in cross-section cut parallel to the axis of the pipe, the inner portion being fixed to the main body of the main unit of the working device;
Another of the annular pressure boundary seals, comprising:
Another of the annular pressure boundary seals is composed of at least a free-end outer portion and an inner portion, the free-end outer portion being in contact with the surface of the pipe after extending both in a direction close to the surface from the inner portion and in a direction away from space (B) in cross-section cut parallel to the axis of the pipe, the inner portion being fixed to the main body of the main unit of the working device;

14. A working device capable of moving along the surface of an internal pipe described in Claims 1 through 13, wherein:
The working device is at least equipped with both a vacuum breaker and a relief valve at the end of the pipe being still equipped with a vacuum breaker or a relief valve.
